# EUROPEAN PATENT APPLICATION

(11) **EP 0 697 310 A2**
(43) Date of publication of application: **21.02.1996**
(21) Application number: 95202181.4
(22) Date of filing: 10.08.1995
(51) Int. Cl.: B60Q 1/44

(54) **Vehicle stop lamps preheating device**

(30) Priority: 15.08.1994 IL 11066194
(71) Applicant: BARAN ADVANCED TECHNOLOGIES (86) LTD, Omer 84965 (IL)
(72) Inventor: Rosenberg, Armand David, Rehovot 76468 (IL)
(74) Representative: Falcetti, Carlo

(57) **Abstract**

A device for preheating the filaments of the brake lamps of a vehicle, comprises:
- a pulse generator (I1),
- means (C1, R4, D1) for detecting a working engine by sensing spikes on the electric wires of the vehicle,
- a mono-stable unit (I2) triggered by the engine spikes for outputting pulse gates while the engine is working,
- logic means (Q2, Q4) for allowing the output of preheating voltage pulses to the lamp filaments only while the engine is working,
- a differentiating unit (R11, C4) for controlling the preheating pulses width so that they have sufficient power to heat the filaments of the vehicle lamps to the desired temperature,
- a power unit (Q3) for driving said pulses to the filaments of the brakes lamps, and
- connection means to the vehicle's electrical system.

## Description

### Field of the Invention

The invention relates to safety accessories for vehicles. More particularly the invention relates to the stop lights lamps system of vehicles.

### Background of the Invention

All vehicles moving on public roads are mounted in the rear with at least two stop light lamps. The system is one of the most important safety system of the vehicle because it alerts following cars of sudden deceleration, and can prevent collision with the vehicle from the rear. The stop light bulbs light in red and signal following cars that the vehicle decelerates. When the driver of the vehicle actuates the brakes pedal and applies the brakes system, a switch closes a circuit which connects the stop lamps to the battery voltage supply, which causes a current to pass through the filaments of the stop bulbs, and the filaments to blaze.

Assuming that the first and the trailing cars posses functioning brakes systems, the most important factor which may prevent collision is the response time of the driver of the trailing car, to the applying of the brakes by the preceding driver. It has been found that an average time of 750 ms is required for a driver to respond and apply his brakes system from the time that he sees the red stop light of the preceding car. This means that if the trailing car travels at a speed of 90 Km/h, the car passes about 18.75 meters even before the following driver applies his brakes system. It has further been found that an additional time, hereinafter referred as the "blazing period", of approximately 250 ms, is required for the stop light bulbs to reach their 90% radiation from the moment of application of the brakes. This means that if traveling at 90 Km/h, the trailing car travels an additional 6.25 meters during the blazing period referred to above. The car companies have invested significant efforts in order to reduce the stopping distance of vehicles, first by applying new materials with better friction coefficients to the braking mechanical systems, and by adapting new methods such as the ABS (Antilock Braking System), but not much have been done to reduce the response time and blazing period mentioned above.

### The Prior Art

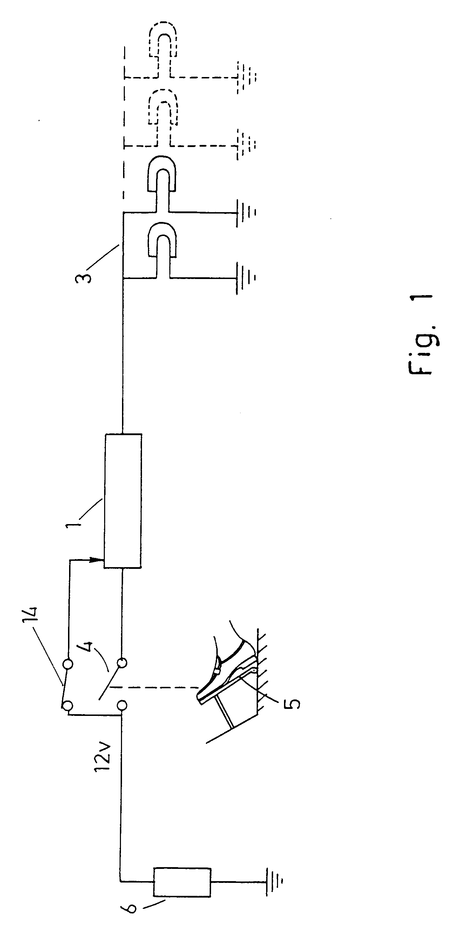

Us 4,791,399 provides a preheating voltage to the brakes cause their tungsten filament to be heated to approximately 1730°C which is just below their blaze temperature (the normal active temperature of the filament is approximately 2500°C). However, said U.S. patent suffers from the following drawbacks which prevent it from being practical:
1) As seen in Fig. 1, the prior art device 1 is connected in series to the brakes lamps 3, and to the brakes switch 4. The brakes pedal Is Indicated as numeral 5, and the vehicles battery as numeral 6. This is dangerous and further does not meet the requirements of the safety standards in several countries because, if the device fails, for example due to a component burnout, it may cause the lamps to be disconnected from the voltage supply when applying the brakes, and the whole brakes lights system to fail.
2) The installation of the device requires an interference with the standard wiring of the car, such as cutting off the positive wire to the lamp, due to the serial connection.
3) Further, the preheating device according to the prior art is active as long as the ignition key is in the ON state. This may cause current consumption and battery discharge while the ignition key is ON but the engine is OFF.
4) The voltage and current supplied to the lamps depend upon the voltage of the cars battery, and are not stable. This may cause a different response time of the lamps during different times, such as during the day, and nights.

It is an object of the present invention to provide means for reducing the time required for the filaments of the brakes bulbs to blaze. Typically, the time can be shortened by 120-150 ms, which means a reduction of the stop distance, while driving at a speed of 90 Km/h, by 3-3,75 meters. Of course the distance depends upon the speed of the car at the time the brakes are applied.

It is another object of the invention to provide a device for preheating the filament of the stop lamps to a temperature near, but below that at which they produce luminant radiation. With currently used lamps, the temperature is approximately 1700°C while the brakes are not applied, and to approximately 2500°C when applying the brakes.

It is another object of the invention to provide a device which meets the requirements of the safety standards in most of industrialized countries which, *inter alia*, require that no device be allowed between the positive port of the vehicle's battery and the stop lamps.

It is still another object of the invention to provide a device which is very simple to install, and which requires minimal connections and interference with the existing wiring and electrical connections of the car.

It is still another object of the invention to provide to the filaments of the stop lights lamps a stable preheating power only while the engine works and the brakes are not applied, and to disconnect the device from the circuit of the brakes system at all other times.

It is a further object of the invention to provide a device which is reliable, safe, simple, and inexpensive to install.

All the above and other characteristics and advantages of the invention will be better understood through the following illustrative and non-limitative description of preferred embodiments thereof.

### Summary of the Invention

In a preferred embodiment the device for preheating the filaments of the brakes lamps of a vehicle, according to the invention, comprises:
- a pulse generator;
- means for detecting a working engine by sensing spikes on the electric wires of the vehicle;
- a mono-stable unit triggered by the engine spikes for outputting pulse gates while the engine is working;
- logic means for allowing the output of a preheating voltage to the lamp filaments only while the engine is working, preferably, but non-limitatively, during gate periods (as hereinbefore defined);
- a differentiating unit for controlling the pulses width so that they have a sufficient power to heat the filaments of the vehicle lamps to the desired temperature;
- a power unit for driving said pulses to the filaments of the brakes lamps; and
- connection means to the vehicle's electrical system.

According to a preferred embodiment of the invention, the preheating temperature of the lamp filaments is a temperature slightly below the blazing point.

Preferably, the device is connected in parallel to the brakes switch. Thus, the safety systems of the vehicle are not affected, since the connection bridges over the brakes switch, without affecting normal operation thereof. The installation of the device of the invention is also very simple, inasmuch as it has only two external unpolarized connection wires. The simplicity of installation of the device, as well as its simple construction, cooperate in making the device inexpensive to the end user.

According to another embodiment of the invention, the device further includes means for continuously sensing the vehicle's battery, and activating the device only when the voltage of the vehicle's battery exceeds a predetermined threshold level, and deactivating the device when the voltage of the vehicle's battery is below said threshold level, wherein the battery's voltage exceed said threshold level when the engine is active.

The device according to a most preferred embodiment of the invention further includes capacitive means for accelerating the blazing of the filaments by charging and storing energy during the preheating period, and fast discharging the energy to the filaments at the moment of applying the breaks. Such capacitive means may comprise, e.g., in addition to a capacitor, additional circuit elements, as may be appropriate in each specific case.

Also encompassed by the invention is a vehicle comprising a device as described above.

The device of the invention, which is connected in parallel to the brakes switch, also meets rigorous safety standards and regulations because it does not prevent the normal functioning of the brakes lamps, in case of malfunction of the device, and further, it does not activates the brakes lights at any time.

The device can further be adapted to function, with few necessary modifications and/or adjustments well understood by the skilled engineer, in any type of vehicle, and with any number of brakes lamps.

### Brief description of the drawings

In the drawings:
- Fig. 1 illustrates, in block diagram form, the connection of a prior art device to the brakes lamps system;
- Fig. 2 illustrates, in block diagram form, the connection of a device according to a preferred embodiment of the invention, to the brakes lamps system;
- Fig. 3 describes the internal structure and electronics circuit of the device according to the embodiment of Fig. 2.

### Detailed description of a preferred embodiment

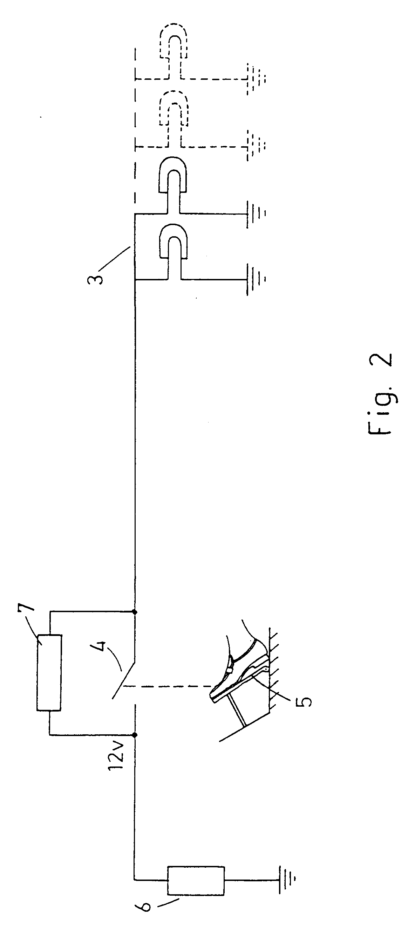

A block diagram showing the connection of the device according to a preferred embodiment of the invention, to the vehicles brakes system, is shown in Fig. 2. It can be seen that the device 7 is parallely connected to the brakes switch 4, and to the brakes lamps 3. The brakes pedal is indicated by numeral 5, and the battery by numeral 6. In fig. 1 numeral 14 indicates an ON-OFF switch for activation and deactivation of the device in the prior art. A similar arrangement may be provided in the device of Fig. 2, subjecting its energization to the ON state of the ignition key.

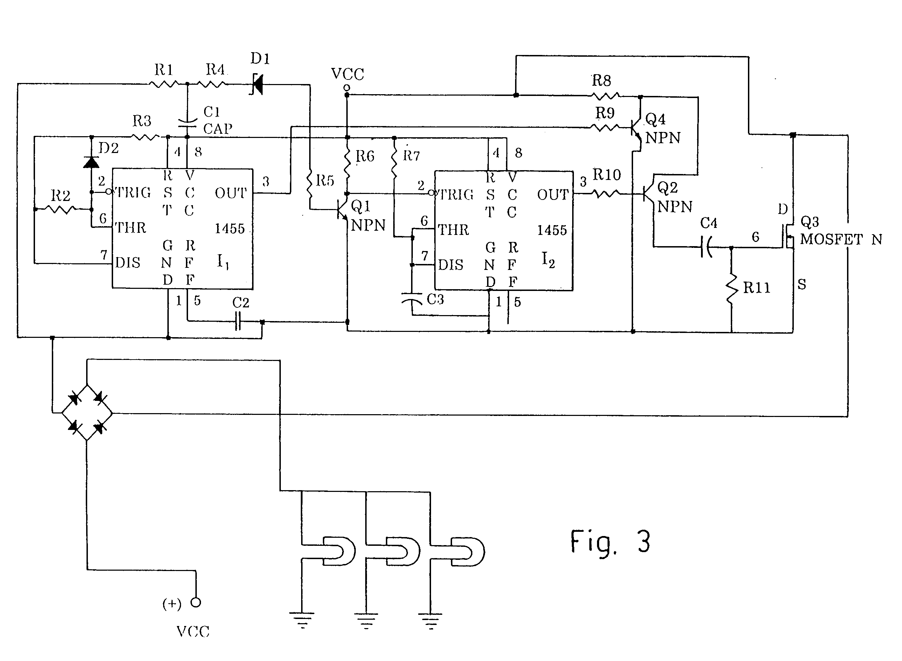

The electronic circuit of the device according to a preferred embodiment of the invention is illustrated in Fig. 3. The device senses that the engine is working, and only then it permits a passage of current, in the form of pulses, to the brakes stop lamps for preheating them to a level of just before their blazing point. Said pulses provide an equivalent current of 0.7A to each one of the filaments of the stop lamps, while the normal blazing current required is 1.1A (for standard 12.8 Volts and 21W bulbs).

When the driver applies the brakes, the bulbs receive a normal 12.8 Volts DC and 1.1A current.

The device recognizes that the engine is ON by sensing the positive 12V wire. When the engine is OFF the positive 12V wire has a stable 12V DC voltage. While the engine is ON, the engine ignition system imposes high frequency spikes on the positive 12V wire. Only upon decoding said spikes, the device becomes active. Further, the device is connected in parallel to the switch of the brakes system, in contrast to prior art devices, and in order to meet safety standards. Accordingly, there is no risk that during a device failure the normal operation of the brakes light system will be impaired.

The device according to a preferred embodiment of the invention and illustrated in Fig. 3, comprises means for sensing the ignition system spikes comprising of D1 and R4, a square wave oscillator I1, a monostable unit I2, inverting and driving transistors Q4 and Q2, a differentiating circuit comprising C4 and R11, and an output driver transistor Q3. The circuit includes few other components which contributes to the proper operation of the device as will be illustrated hereinafter.

During the standby operation of the device, when the engine is off, the output of the mono-stable unit I2 pin 3 (hereinafter referred as I2,3) is in a LOW state, the oscillator I1 outputs square pulses (in I1,3). Said pulses are driven by transistor Q4, but they are prevented from reaching the output port to the lamps by the switching transistor Q2 which is in a cut-off state due to a LOW state in its base from the monostable unit. In this state, hereinafter referred as the "standby" state of the device, no pulses are output to the bulbs, and their filaments are not preheated.

While the engine in ON, spikes appear on the main 12V positive wire of the vehicle due to the high voltage switching of the ignition system. The intensity of these pulses is normally tens of Volts, and it is easy to detect them. The device senses these pulses, and when they appear, they pass through capacitor C1 and resistor R4, and if and only if their intensity is higher then a threshold voltage determined by the Zener device D1, they can pass to the base of Q1. Q1 drives the pulses to the TRIG input of I2 (I2,2). Monostable I2 initiates a high pulse, hereinafter referred as "gate", in its output (I2,3). The gate has a duration termed "gate period" (and longer than any possible period of the voltage spikes). Said gate switches Q2 into a saturation state, and the a-stable pulses which were initiated by I1, and driven by Q4 can pass to the emitter of Q2. Capacitor Q4 and resistor R11 differentiate the signal to output pulses to the gate of the MOSFET power transistor Q3. Q3 supplies the pulses, the power of which is enough to heat the filaments of the brakes lamps just to a point of below the blazing point, or more particularly, to a temperature of about 1700°C.

It is to be realized that the device has only two connections, one positive connection to the +12V, and the other to the filaments of the brakes lamps. The very low resistance of the filaments, which are connected in one end to the negative port of the battery, provides a virtual ground to the device. Further, diodes bridge DB1 facilitates the device connection disregarding the wire's polarity.

Other conventional circuit elements shown in the figure, but not specifically referred to in the above description, will be easily understood by the skilled engineer, and are therefore not described in detail, for the sake of brevity.

According to another embodiment of the invention a voltage measuring device is provided, that measures at all time the vehicle's battery voltage. When the engine is running the battery voltage exceeds 13Vdc, while the same battery, when the engine is cut out, shows 12.2Vdc. This may provide an information and trigger the activation of the device and its shut-off.

In a more preferred embodiment of the invention it is possible to include in the device capacitive means for charging and storing energy during the preheating period, and fast discharging the energy to the filaments at the moment of applying the breaks. This can further accelerate the blazing of filaments by few more tens of milliseconds.

While the embodiment of the invention have been described by way of illustration, it will be apparent that the invention can be carried into practice with many modifications, variations and adaptations, and with the use of the numerous electronics equivalents or alternative solutions that are within the scope of the persons skilled in the art, without departing from the spirit of the invention or exceeding the scope of the invention.

## Claims

1. A device for preheating the filament of the brake lamps of a vehicle comprising:
- detecting means (C1, D1, R4) for detecting a working engine by sensing voltage on electric wires of the vehicles and
- voltage pulse generation means (I1, Q4, I2, Q2, Q3) responsive to said detecting means for applying voltage pulses to said brake lamps, said voltage pulses having an average power sufficient to heat the filaments of said brake lamps to a desired temperature.

2. A device for preheating the filaments of the brake lamps of a vehicle, comprising:
- a pulse generator (I1) for generating periodic pulses,
- means (C1, R4, D1) for detecting a working engine by sensing spikes on the electric wires of the vehicle,
- a mono-stable unit (12) triggered by the engine spikes for outputting pulse gates while the engine is working,
- logic means (Q2, Q4) for allowing the output of preheating voltage pulses to the lamp filaments only while the engine is working,
- a differentiating unit (R11, C4) for controlling the width of said preheating pulses so that they have sufficient power to heat the filaments of the vehicle lamps to the desired temperature,
- a power unit (Q3) for driving said preheating pulses to the filaments of the brakes lamps, and
- connection means to the vehicle's electrical system.

3. A device according to claim 2, wherein the logic means allow the output of the preheating voltage only during gate periods.

4. A device according to claim 1 or 2 or 3, wherein the preheating temperature of the lamp filaments is a temperature slightly below the blazing point.

5. A device according to claims 1 to 4, wherein the device is connected in parallel to the brakes switch (4).

6. A device according to claims 1 to 5, having only two unpolarized external connection wires.

7. A device according to any one of claim 1 to 6, further including capacitive means for accelerating the blazing of the filaments by charging and storing energy during the preheating period, and fast discharging the energy to the filaments when the breaks are applied.

8. A safety system for a vehicle, comprising a device according to any one of claims 1 to 7, together with connections to the power line and brake switch of a vehicle.

9. A vehicle comprising a device according to any one of claims 1 to 7.

10. A device according to any one of claims 1 to 9, further comprising means for continuously sensing the vehicle's battery voltage and activating the device only when the voltage of the vehicle's battery exceeds a predetermined threshold level, the said threshold level being reached when the engine is working, and for deactivating the device when the voltage of the vehicle's battery is below said threshold level.
